# EUROPEAN PATENT APPLICATION

(11) **EP 4 194 585 A1**
(43) Date of publication of application: **14.06.2023**
(21) Application number: 21461633.6
(22) Date of filing: 09.12.2021
(51) Int. Cl.: C23C 18/08, C25D 5/54, C25D 7/06, G02B 6/00, C25D 3/38

(54) **A METHOD OF COATING OPTICAL FIBER AND OPTICAL FIBER COATING FACILITY**

(71) Applicant: Inphotech Spolka z Ograniczona Odpowiedzialnoscia, 05-850 Oltarzew (PL)
(72) Inventor: Wysokinski, Karol, 05-850 Oltarzew (PL); Karczewski, Maksymilian, 05-850 Oltarzew (PL); Wrona, Bartlomiej, 05-850 Oltarzew (PL); Napierala, Marek, 05-850 Oltarzew (PL); Nasilowski, Tomasz, 05-850 Oltarzew (PL)
(74) Representative: Bury & Bury

(57) **Abstract**

The invention concerns a method of coating optical fiber comprising a process of deposition (**102**) of a first solution on a surface of a length of optical fiber to coat the surface of optical fiber with a first solution and then a process of passing (**105**) said length of optical fiber through an electroplating bath of a second solution adapted to plate a predetermined metal on said length of optical fiber via electroplating. The first solution comprises a solution of noble metal or noble metal compound in a solvent and after the process of deposition (**102**) optical fiber coated with the first solution, is subjected to a heat treatment (**103**) before the optical fiber enters and passes (**105**) through the electroplating bath of the second solution.

The invention further concerns an optical fiber coating facility for implementing a method according to the invention.

## Description

### Field of the invention

The invention concerns a method of coating an optical fiber and an optical fiber coating facility adapted to coat the optical fiber with metal layers via an electroplating.

### State of the art

Optical fibers made of silica glass lose their mechanical properties due to harsh conditions such as those experienced during annealing. A typical optical fiber with an outer diameter of approximately 125 µm subjected to the annealing process at 600°C becomes very brittle just after 1 hour of a heat treatment (Materials, 7, 6947-6964, 2014). A hydrolysis reaction of silica on a surface of the optical fiber that occurs in the presence of water vapor is a major cause that affects loss of mechanical properties of the optical fiber. Silanol groups (Si-O-H) formed as a result of the hydrolysis cause formation and development of microcracks on the surface of the optical fiber. It is known from the literature that combination of air, humidity and high temperature are the most significant factor contributing to this phenomenon (J. Am. Ceram. Soc., 83 [12], 3100-3108, 2000; Opto-Electronics Review 3-4 '95, 107-109). In addition, silica optical fibers were not observed to undergo similar loss of the mechanical properties when subjected to high temperature treatments in an atmosphere of an inert gas such as pure argon. Therefore, isolation of surfaces of the silica optical fibers from air via application of a coating during exposures to high temperatures results in decreased probability of formation of silanol groups due to hydrolysis which leads to reduced development of microcracks which further prevents loss of mechanical properties.

It is a common practice to coat optical fibers with polymeric coating. However, polymers are prone to melting and degradation at high temperatures, which makes them a poor choice for coating of optical fibers that will be subjected to high temperatures (Journal of Lightwave Technology, vol. 26, no. 20, October 15, 2008). Polyimide, which is the most heat resistant polymer and which could potentially be used as a coating applied on optical fibers, can only be successfully used long-term in temperatures up to 350°C. Since polymers are acting poorly as coating materials for applications where high temperature conditions are present such as those found in foundries, metallurgical industry, heavy industry. Optical fibers are also often subjected to high temperatures in military applications. Metallic coatings are widely applied on optical fibers in order to provide an effective method of mechanical properties loss prevention while at the same time overcoming problems with high temperatures that are observed with polymers.

European patent EP3194346B1 discloses a method and an apparatus for production of metal-coated optical fiber involving feeding a length of glass optical fiber through a first solution bath to plate a first predetermined metal on the glass optical fiber via electroless deposition. The length of glass optical fiber is passed continuously from the first solution bath to a second solution bath adapted to plate thereon a second predetermined metal via electrolytic plating such that the optical fiber gets in contact with an electrode only after at least some of the second predetermined metal has been applied. The length of glass optical fiber may be passed continuously from the second solution bath to a third solution bath adapted to plate thereon a third predetermined metal via electrolytic plating. Therefore, the third solution bath is located downstream from the second solution bath and the first solution bath is located upstream from the second solution bath. Upstream and downstream therefore refer to relation with respect to a motion of optical fiber during the process.

Electroless deposition is as an autocatalytic process in which metallic compounds dissolved in a solution are reduced from a liquid electrolyte to a metal in a solid state. This process occurs within presence of reducing agents which when added into a solution that contains metal ions causes their reduction without use of external current source.

Use of electroless deposition is advantageous as the first predetermined metal may be a metal that is inexpensive and easily available. Electroless deposition is known to work well with copper and nickel. On the other hand electroless deposition uses reagents in an inefficient way and generates a lot of waste. It also limits the maximal length of a fiber coated in the single process quite significantly.

### Problem to be solved

Methods of coating of optical fibers with metals via electroplating in general involve an initial step or a process that provides an initial solid conductive layer on the surface of an optical fiber. This layer is further thickened by electroplating. This initial step or process is typically accomplished via electroless deposition, which is a complex and time-consuming procedure that constitutes a bottleneck of coating method. Electroless deposition methods usually produce a fragile metal layer that easily flakes off during subsequent depositions of metal coatings via electroplating. Such layers suffer from low adhesion and relatively high brittleness. Moreover, the electroless deposition methods are difficult to convert into a continuous process as they require a very active catalyst that may contaminate electroless bath and contribute to premature bath decomposition. On the other hand, non-catalytic electroless deposition methods are prone to form undesirable accumulation of metallic sediment.

### Solution to the problem

A method of coating an optical fiber according to the invention comprises a process of depositing a first solution on a surface of a length of the optical fiber to coat its surface with the first solution. Afterwards the method comprises a process of passing said length of the optical fiber through an electroplating bath of the second solution adapted to plate a predetermined metal on said length of the optical fiber via electroplating.

The first solution comprises a noble metal or a noble metal compound in a solvent. Under heat treatment, solutions of noble metals or noble metal compounds are susceptible to thermal transition into initial solid conductive layer of metal or metal compound (especially oxide or sulfide).

In method according to the invention, the optical fiber coated with the first solution is subjected to a heat treatment, before it enters the electroplating bath of the second solution. The heat treatment causes thermal transition of the noble metal compounds and/or noble metal complexes of the first solution and results in deposition of conducting substance on the surface of the optical fiber to form an initial solid conductive layer. Often, although not always, applying temperatures higher than or equal to 100°C is required to provide sufficient speed of thermal transition. This initial solid conductive layer that coats the surface of the optical fiber, enables applying additional coatings via electroplating.

A major difference between thermal transition method and electroless methods is that in electroless methods the optical fiber needs to be pre-deposited with a catalyst or a sensitizer and then coated with a noble metal in the solution. A key step in thermal transition method is heat treatment that occurs after deposition of the solution on the optical fiber. During the heat treatment process, layer of the first solution dries out and then further heating leads to a thermal transition and in effect to formation of an initial solid conductive layer. This means that the process of formation of the metallic layer does not take place in a solution.

Methods where the thermal transition is utilized to provide metal coatings are easier to perform from a technological point of view. The process of thermal transition does not occur in a solution, in effect no chemical reaction occurs in solution, which ensures that solution is not becoming contaminated over time by accumulation of the side products of reaction.

The process of thermal transition shows potential to be considerably faster than electroless deposition known in the art. Furthermore, metal layer that was deposited during this process exhibits strong adhesion to the surface of the optical fiber and therefore it is less prone to be rubbed off.

The process of deposition of the first solution on a surface of an optical fiber and subjecting it to a heat treatment is advantageously repeated until electrical sheet resistance of resulting layer is lower than 0.8 MΩ/sq. The value of electrical sheet resistance is a measure of thickness of the initial solid conductive layer and also indicates that the optical fiber coated with initial solid conductive layer is capable to be electroplated afterwards. It was observed that the higher the value of the electrical sheet resistance the slower the process of electroplating. Electrical sheet resistance of 0.8 MΩ/sq is a tradeoff between the time required to provide initial solid conductive layer, the time required for electroplating and a risk that parts of the optical fiber will not be adequately covered by the initial solid conductive layer and will not be further sufficiently coated during electroplating.

Advantageously the process of deposition of the first solution on the surface of the optical fiber and subjecting it to heat treatment is repeated until electrical sheet resistance of resulting layer is lower than 4 kΩ/sq. Deposition of initial layer takes considerably more time, however the process of electroplating that follows is then faster and the risk that accidental damages of initial solid conductive layer would degrade to final quality is reduced.

The first solution comprises advantageously silver hydroxide and/or silver oxalate.

Alternatively, the first solution comprises chlorauric acid and/or gold(III) chloride.

Alternatively the first solution comprises platinum(IV) chloride.

Advantageously, the method is realized as a single continuous process. Alternatively, it is divided into at least two sub-processes running at different speed.

An optical fiber coating facility according to the invention comprises an electroplating bath station having at least one electroplating bath and a conductive layer station for pre-coating of an optical fiber with an initial solid conductive layer. The conductive layer station is arranged upstream of the electroplating station so that the optical fiber is first pre-coated with an initial solid conductive layer and then enters electroplating bath. The optical fiber coating facility is adapted to execute a method according to the invention and the conductive layer station comprises the deposition station for deposition of the first solution on a surface of the optical fiber and a heating means located downstream from the deposition station so that the optical fiber having the first solution deposited on its surface is subjected to a heat treatment.

Advantageously, at least one intermediate optical fiber storage means is used for storing optical fiber in-between subprocesses.

### Short description of drawings

The invention has been described below in detail, with reference to the attached figures, specifically,
Fig. 1a showing a flowchart of calibration of the method according to the invention,
Fig. 1b showing a flowchart of an embodiment of the method according to the invention,
Fig. 2 showing a block diagram of an embodiment of the facility according to the invention,
Fig. 3a and 3b showing block diagrams of parts of an alternative embodiment of the facility adapted to execute method according to the invention divided into two subprocesses

### Embodiments of the invention

### Calibration

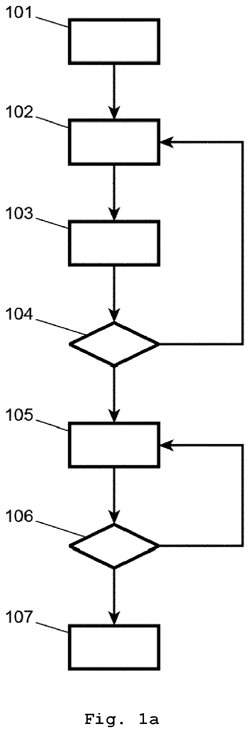

Before the process of depositing is started on a full-scale, an initial calibration is useful to determine required number of repetitions of certain steps. Fig. 1a illustrates this process schematically. If protective layers are present on the surface of the optical fiber, then they are removed by stripping **101,** then the first solution is deposited **102** and subjected to the heat treatment **103.** Then electrical and/or mechanical parameters are measured **104.** Sheet resistance has proved to be a good indicator of quality of the deposited layer as it represents thickness and electrical resistivity of the material. If one deposition of layer is not sufficient then subsequent layers are added in following deposition **102** of the first solution and the heat treatment **103** steps. Number of repetitions is noted for the future reference during execution of the full-scale method run without further calibration in the facility. Additionally, temperature of the heat treatment and time of exposure of the optical fiber to heat can be tuned and values to be used are also noted. Sheet resistance is typically measured with classical four point probe method also known as four terminal method. This method can be applied in the present invention. There are other methods available e.g. Van der Pauw method or Montgomery Method dedicated for more demanding materials. The methods give pretty much the same result but are more complicated. For measurements of sheet resistance according to the present invention even straight two point method gives results sufficiently accurate as resistance of the layer at time of the measurement render resistance of measurement cables negligible, way below 10%, and substantially the same as other methods. Accordingly this method is applied to reduce to minimum risk of mechanical degradation in measurement in which accuracy is not of essence.

Minimum value of sheet resistance is related to the following electroplating process - for a given facility it may be required to verify experimentally number of layers and value of sheet resistance of initial solid conductive layer that guarantees an effective electroplating **105.** Also, number of subsequent electroplating steps **105** can be verified by a simple experiment in a given facility. It has been checked that if multiple electroplating baths are to be used, it is effective to have first electroplating bath shorter than subsequent one or ones.

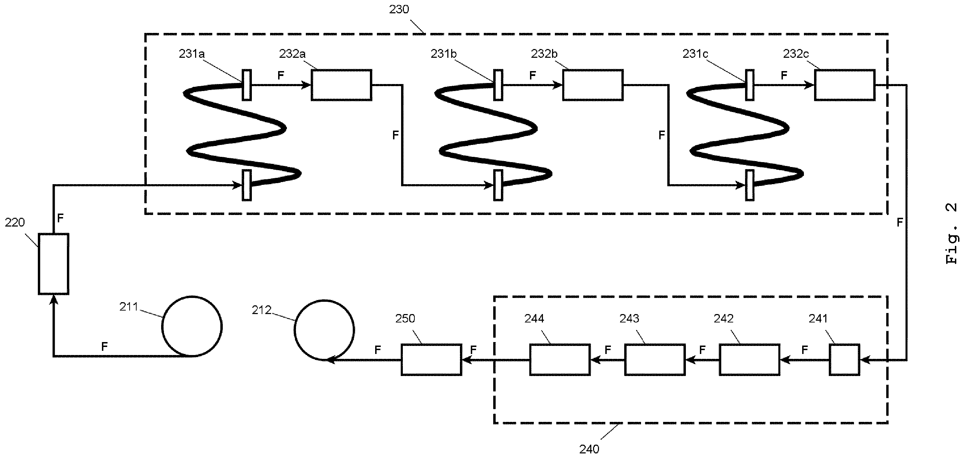

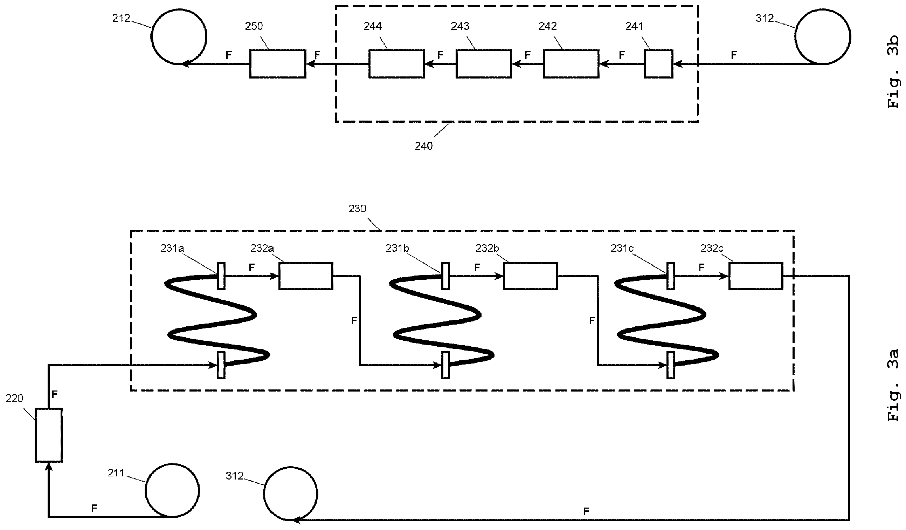

The whole process should be adjusted to run with the same speed. Therefore, number of subsequent iterations of deposition **102** and heat treatment **103** steps as well as values of parameters such as time and temperature of the heat treatment **103** need to be adapted, similarly, number of iterations and amount of time of the electroplating **105** in subsequent baths so as to reach a correct duration of each step for a given optical fiber drawn with a given speed. This applies to all other steps of the process also including a rinsing step **107.** Alternatively if it is very difficult to synchronize method steps it is possible to implement subsequent steps separated by rewinding the optical fiber. Then time/speed of execution of particular steps may differ significantly. A block diagram of facility adapted to provide coating in single process is shown in Fig. 2 while alternative embodiment shown in Fig. 3a and Fig. 3b is based on applying initial layer and electrolysis in separate processes with intermediate reel.

Accordingly, parameters of the process may vary depending on the composition of the first solution and on the coating layer that is to be deposited as well as on the material and size of the optical fiber that is to be coated. However, a person skilled in the art, having learned the teachings of the present invention, is able to adapt these parameters easily and routinely.

It is noted that calibration itself is a process that results in an optical fiber being coated and therefore falls within a scope of protection as defined with attached claims.

### Example 1

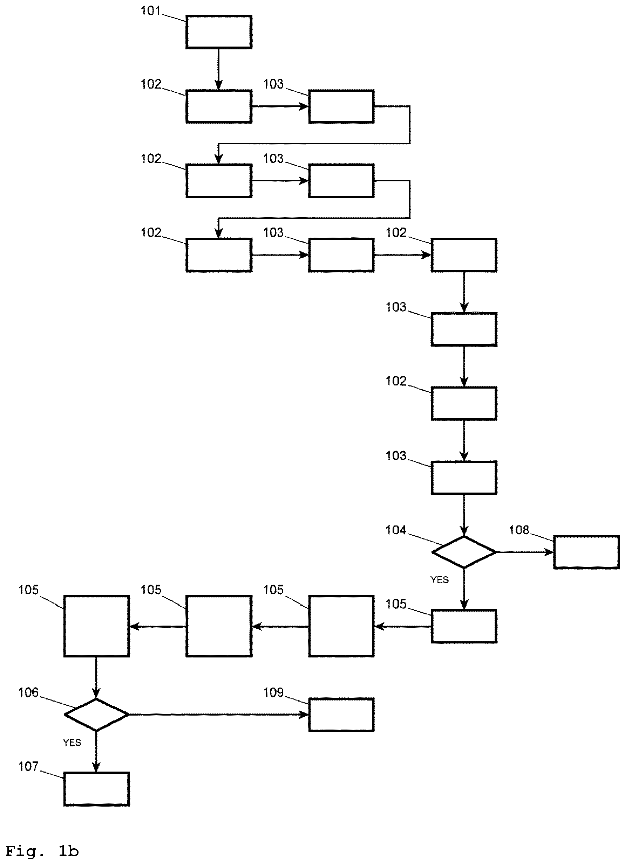

An embodiment of a method of coating an optical fiber according to the invention is described below with reference to fig. 1b showing a block diagram thereof.

First external protective layer - if present - is removed in a process of stripping **101.**

Afterwards, a process of deposition **102** of a first solution on a surface of a length of the optical fiber is applied to coat the surface of the optical fiber with the first solution. The first solution deposited on the surface of the optical fiber according to this embodiment is an aqueous mixture of:
- silver hydroxide AgOH 30 mmol,
- water H₂O 400 mmol,
- ethylenediamine C₂H₄(NH₂)₂ 200 mmol,
- sodium laureth sulfate 4 mmol. This substance lowers of the surface tension and works considerably well. It is truth quite universally acknowledged, that other surfactants or detergents having cations other than sodium can also be applied.

Tests show that applying a solution comprising a noble metal or a noble metal compound allows to obtain an initial solid conductive layer via heat treatment that causes transition of the noble metal compounds and/or complexes of the first solution mixture and in effect coating of a surface of an optical fiber.

If a metal is used instead of its metal compound, then an oxide layer, which is present on a surface of the particles of metal itself, is transformed into a pure metal during heat treatment. Thermal transition of metal compounds into metals during heat treatment is an inherent property of noble metals.

An optical fiber coated with the first solution, is subjected to the heat treatment **103** process that occurs in temperatures that fall in range between 300 and 350°C. It is also possible to use temperature of 100°C during the heat treatment **103** process, however, in such case time of exposition to heat required for thermal transition is considerably longer and therefore the process is slower. Nonetheless, if other processing steps such as electroplating are designed to consume a lot of time, then time of obtaining initial solid conductive layer is no longer an issue.

The heat treatment **103** causes thermal transition of the compounds of the first solution from a dissolved ethylenediamine complex of silver, (i.e., Ag(en)ₙOH, where en is ethylenediamine and n is a value falling typically between 1 and 3) to pure AgOH, then subsequently to Ag₂O and then finally to Ag to obtain an initial solid, conductive layer on the surface of the optical fiber. The surface of optical fiber, on which the first solution was applied, is exposed to the heat treatment **103** for approximately 30 s. Experiments showed that usually a reasonable time vary from 10 seconds to 10 minutes, depending on configuration and parameters such as speed of drawing the optical fiber through the facility and the temperature during the heat treatment **103.** It was generally observed that solution of noble metal or noble metal compound in a solvent when subjected to drying on a surface of the optical fiber results in a deposition of noble metal compound or noble metal complex on the surface of the optical fiber. Further heat treatment causes thermal transition to conductive layer. Drying if faster if heat treatment is applied immediately. In such case thermal transition and drying occur simultaneously.

The basic purpose of deposition **102** and heat treatment 103 steps is to provide initial solid conductive layer that enables electroplating, said layer needs to have electrical parameters adapted to electroplating in the given setup or facility and needs to have sufficient thickness to sustain mechanical wear and tear and chemical degradation that may occur when an optical fiber is passed through electroplating bath. As thickness of the initial solid layer is correlated with resistance, the determination of the value of lower than predetermined usually means that initial solid conductive layer is sufficient for subsequent electroplating. Successful experiments were obtained with sheet resistance value of 0.8 MΩ/sq. If the required thickness of the initial solid conductive layer cannot be obtained with a single deposition **102** and subsequent heat treatment **103** then steps of the first solution deposition **102** and heat treatment **103** are repeated. In the present example, a cycle that involves deposition **102** steps and subsequent heat treatments **103** steps was executed three times.

Required number of iterations needs to be determined for any given type of the first solution mixture and any given optical fiber.

Once a number of iterations is determined no further measurements **104** of electrical parameters are necessary. However, measurements **104** of electrical parameters can be useful in quality control.

Thickness of the initial solid conductive layer can be determined immediately or after a few iterations of deposition **102** of the first solution and subsequent heat treatment **103.** The thickness of the initial solid conductive layer can be determined by a measurement **104** of its electrical properties. The measurement **104** can be done after every iteration as showed in fig. 1a or after a first number of iterations and then again, every second number of iterations. An example presenting three initial iterations and the measurement **104** every second iteration thereafter is shown in fig. 1b.

Effectiveness of electroplating that follows the process of depositing the initial solid conductive layer depends on the electrical resistivity of the initial solid conductive layer deposited on the surface of the optical fiber. Additionally, adhesion, durability and mechanical properties may affect electroplating. It is possible with just one iteration of deposition that uses thermal transition of noble metal complex or noble metal compound to obtain a coating with the initial solid conductive layer but usually it is easier and faster to repeat it several times. There is almost no upper limit for the value of sheet resistivity required for electroplating, however experiments showed that the value of and higher that 0.8 MΩ/sq is not very useful while values of and lower than 4 kΩ/sq usually enable faster electroplating and a fail-safe range for electroplating.

In this embodiment, a step of deposition of the first solution **102** and a step of heat treatment **103** are executed three times until required parameters of the initial layers are reasonably met. The sheet resistance is measured **104** and an alert is generated **108,** which bring it to attention of the person supervising the process, if measurement is above 4 kΩ/sq.

The heat treatment steps need to be performed for approximately 30 s each at temperatures ranging between 200-400°C.

When process of deposition of initial solid conductive layer is well calibrated for a given optical fiber, the measurement step **104** can be omitted entirely and predefined number of iterations of steps **102** and **103** can be continuously executed without verification of sheet resistance **104.** However, it is safer to have a readout at this step, in case the process becomes distorted for any reason.

When the initial solid conductive layer is successfully applied on the length of the optical fiber then a process of electroplating **105** is carried out. The process of electroplating **105** comprises passing said length of the optical fiber through an electroplating bath of the second solution. In the present embodiment, the second solution that enables coating of the optical fiber with copper is a mixture of:
- Copper sulfate hydrate 250 g/L,
- Concentrated sulfuric acid 50 g/L,
- Concentrated hydrochloric acid 0.1 g/L,

It is possible to use just one bath for electroplating, yet it is easier to use two. The first electroplating bath should be shorter, and this way, at least partially aimed, to protect the initial solid conductive layer from too long exposure to the electroplating solution that may cause damage to the initial layer. Generally, electroplating of the optical fiber that was coated with a conductive layer, is extensively discussed in the prior art e.g., in EP3194346B1, hence it is known to the one skilled in the art.

The process of electroplating **105** is implemented dynamically in a bath provided with openings which have diameters at least 50% greater than the diameter of the optical fiber. The optical fiber runs through the openings. It is important to prevent surface of the optical fiber from touching edges of the openings to protect the conductive layer from damage. The optical fiber to be coated with copper usually moves with a speed between 0.1 and 100 cm/min, typically 2.5 to 5 cm/min. Speed of 5 cm/min is particularly convenient and was used in the example. An optimal speed depends on size of a bath. The longer the bath, the higher the speed that can be applied to pass the optical fiber through the electroplating bath. Speed of 50 cm/min is convenient with an electroplating bath having length of c.a. 60 m, however the length of the electroplating bath is also dependent on a desired thickness of the initial solid conductive layer and on the current density applied during the process of electroplating.

A speed in range of 2.5 to 5 cm/min proved to be quite convenient when coating with copper in a typical electroplating setup or facility.
A conductive layer obtained by thermal transition may be still relatively fragile due to its low thickness. Therefore, longer exposure to the electroplating solution as well as friction against elements of the setup need to be avoided.

In the present embodiment multiple electroplating **105** steps are applied in different electroplating baths. The first electroplating bath is shorter to limit exposure of the initial solid conductive layer to the electroplating solution. Electrodes need to be applied carefully. Anode is immersed in the electroplating solution and cathodic contact is applied at the downstream end of the electroplating bath outside the electrolyte. Cathodic contact is realized as an aluminum foil.

Subsequent electroplating baths are longer as after the first electroplating iteration, coating that was applied on the surface of the optical fiber is less susceptible to damage from friction and is not damaged by the electroplating solution. Total number of successive electroplating **105** iterations depends on a thickness of the coated conductive layer which is tested in step **106.** Steps of testing **106** and generating alert **109** are optional for a well calibrated process and for whose parameters that are under control. In the present embodiment the total number of electroplating steps is equal to 4, however the process can be carried out with larger or smaller number of steps, depending on the final application.

Finally, the optical fiber is cleaned during the rinsing step **107.** In result of the process, an optical fiber coated with copper is obtained. A thickness of deposited copper layer of 10.5 µm is obtained on the surface of the optical fiber for a silica optical fiber with an outer diameter of approximately 125 µm measured after stripping **101** of polymer coating in the step of stripping **101,** drawn with a speed of 5 cm/min, while a total current flowing through all electrolytic deposition steps is equal to 100 mA. Initial and final fragments of the coated optical fiber exhibit lower thickness of copper coating and are shorter than the sum of lengths of the electroplating steps.

Further experiments proved that wider ranges of quantities of each compound in the solution are also applicable even if in some combinations more iterations of depositions **102** and heat treatments **103** are required. Solution mixture that has been tested was:
- silver hydroxide, AgOH, in a range between 10 and 100 mmol,
- water, H₂O, in a range between 100 and 2000 mmol
- ethylenediamine C₂H₄(NH₂)₂ in a range between 20 and 1000 mmol,
- ammonium laureth sulfate in a range between 0.1 and 10 mmol.

Method according to the embodiment of the invention can be executed in a facility in which an optical fiber to be coated is unwound from the first reel **211** passed through the facility stations **220, 230, 240, 250** and wound back on the second reel **212** after coating. A block diagram of such facility is shown schematically in Fig. 2. The optical fiber **F** and direction (stream) of feeding thereof is denoted with a black arrow. Stations are disposed in series with respect to the optical fiber. Accordingly, speed of processing of all stations **220, 230, 240, 250** should be substantially the same. Downstream from the first reel **211** there is located a stripping station **220** comprising dichloromethane bath with metal scraper located downstream of the dichloromethane bath. Other solvents and other stripping mechanisms (e.g., without any scraper) can also be applied. Reels are most often applied optical fiber storage means but also other optical fiber storage means can be applied. Also, the invention can be applied directly in the process of fabrication of an optical fiber then the first reel and the stripping steps are not necessary, however optical fiber needs to be at least partly cooled.

Initial solid conductive layer is formed in an initial solid conductive layer station **230** located downstream from the stripping station **220.** First solution is deposited with a first silicone hose **231a** filled with the first solution. The optical fiber is passed through the first silicone hose **231a** and then heat treated by a first heater **232a** located downstream from the first silicone hose. Subsequently, the optical fiber is passed through a second silicone hose **231b** filled with the first solution and then heat treated by a second heater **232b** located downstream from the second silicone hose **231a.** Subsequently, the optical fiber is passed through a third silicone hose **231c** filled with the first solution and then heat treated by a third heater **232c** located downstream from the third silicone hose **231c.** Accordingly, in the initial solid conductive layer station, the first solution is deposited and subsequently heat treated thrice. Heaters are set to a temperature in range of 300 to 350°C. It is however convenient to have a facility with versatile heaters that have temperatures tunable within a range from 100°C to at least 900° C to enable heat treatment of different solutions.

Downstream from the initial solid conductive layer station **230** an electroplating station **240** is located. Electroplating station **240** comprises initial electroplating bath **241** and subsequent three electroplating baths **242, 243, 244.** Despite being represented schematically in a curvy way in figures silicone hose **231a, 231b, 231c** are arranged in rather straight manner so that optical fiber did not touch any elements.

A rinsing station **250,** in which the remains of the second solution are cleaned off from the optical fiber, is located downstream from the electroplating station **240** and upstream from the second reel **212.**

### Example 2

In the second example, gold coating is provided with the electroplating while an initial solid conductive layer is made of silver.

After stripping **101** of the optical fiber, a process of depositing **102** of a first solution on a surface of a length of the optical fiber is applied to coat the surface of the optical fiber with the first solution. The first solution applied according to this embodiment is an aqueous mixture consisting of:
- silver hydroxide, AgOH in amount of 10 to 100 mmol (preferably 40),
- water, H₂O in amount of 100 to 2000 mmol (preferably 400),
- 1,2-diaminopropane, CH₃CH(NH₂)CH₂NH₂ in amount of 20-1000 mmol (preferably 200),
- potassium laureth sulfate in amount of 0.1 to 10 mmol (preferably 3).

Optical fiber coated with the first solution, is subjected to heat treatment **103** process that occurs in temperatures that fall in range between 320°C to 380°C. The heat treatment causes thermal transition of the first solution from a 1,2-diaminepropane complex to pure AgOH, subsequently to Ag₂O and then to Ag to obtain a conductive layer on the surface of the optical fiber. Heat treatment is applied to the surface of fiber for approximately 60 s.

Thickness of the initial solid conductive layer can be determined immediately or after few iterations of deposition **102** of the first solution and the subsequent heat treatment **103** steps. The thickness of the initial solid conductive layer can be determined in a measurement **104** step based on its electrical properties. The measurement **104** can be done after every iteration of deposition of the initial solid conductive layer as shown in fig. 1a or after a first number of iterations and then again, every second number of iterations. An example with 3 initial iterations and measurement **104** every second number of iterations thereafter is shown in fig. 1b.

Afterwards, a process of electroplating **105** of the optical fiber is applied. The process of electroplating **105** comprises passing said length of the optical fiber through an electroplating bath of a second solution. In the present embodiment the second solution is a mixture of:
- Potassium dicyanoaurate, K[Au(CN)₂] 100 g/L
- Dipotassium citrate, 100 g/L
- Disodium salt of ethylenediaminetetraacetic acid 10 g/L
- Iron(III) chloride 0.5 g/L

Iron(III) chloride 0.5 g/L is optional and affects some processes, therefore needs to be treated with caution.

The process of electroplating **105** is implemented dynamically in the electroplating bath provided with openings having diameters at least 50% greater than a diameter of the optical fiber. Optical fiber runs through the openings. It is important to prevent surface of the optical fiber from touching the edges of the openings to protect the conductive layer from damage. The optical fiber usually moves with a speed between 0.1 and 100 cm/min, conveniently for gold coatings it is in range of 1.25 to 2.5 cm/min. Speed of 2.5 cm/min was particularly convenient and was used in this example.

In the present embodiment multiple electroplating processes **105** are applied in different electroplating baths. The first bath is shorter to limit exposure of the conductive layer to the electroplating solution. Electrodes need to be applied carefully. Anode is immersed in the electroplating solution and cathode is applied at the downstream end of the bath outside the electrolyte. Cathode in this example is a graphite pulley.

Finally, the optical fiber is cleaned during a rinsing step **107.** An optical fiber coated with 15 µm thick layer of gold is obtained when a silica optical fiber with an outer diameter of 125 µm measured after stripping the polymer coating is drawn with a speed of 2.5 cm/min, while a total current flowing through all electrolytic steps is equal to 50 mA. If the whole process is arranged such that the drawing speed vary for each step, then 15 µm thick coating will be achieved if the same charge per fiber length will flow through. Initial and final fragments of the coated optical fiber exhibit lower thickness of gold coating and are shorter than the sum of lengths of the electroplating steps.

The present invention is applicable for coating optical fiber not only with copper or gold but also with other metals in particular, silver, nickel and platinum. Once effective initial solid conductive layer is provided basically any metal capable to be electroplated may easily be applied with the coating process. Different electroplating steps may produce coatings made of layers of various metals.

Initial solid conductive layer can be applied as a result of heat treatment of various solutions of noble metal or noble metal compound. Conditions required for heat treatment are preferably adapted to a particular first solutions of metal or metal compound. Other examples of preferable first solutions include mixtures mentioned in a table below together with advantageous ranges of temperatures and times used during heat treatment to obtain thermal transition into initial solid conductive layer.

| No | Solution | Temp. | Time |
|---|---|---|---|
| 1 | • silver hydroxide 30 mmol (10-100 mmol) | 100-400°C | 0.15-5 min |
| | • 1,2-diaminepropane 150 mmol (20-1000 mmol) | | |
| | • water 500 mmol (100-2000 mmol) | | |
| | • ammonium laureth sulfate 2 mmol (0.1-10 mmol) | | |
| 2 | • silver oxide 15 mmol (10-100 mmol) | 100-400°C | 0.15-5 min |
| | • 1,2-diaminepropane 100 mmol (20-1000 mmol) | | |
| | • water 500 mmol (100-2000 mmol) | | |
| | • sodium laureth sulfate 1 mmol (0.1-10 mmol) | | |
| 3 | • silver hydroxide 30 mmol (10-100 mmol) | 100-400°C | 0.15-5 min |
| | • diethylenetriamine 100 mmol (20-1000 mmol) | | |
| | • water 600 mmol (100-2000 mmol) | | |
| | • potassium laureth sulfate 3 mmol (0.1-10 mmol) | | |
| 4 | • silver citrate 30 mmol (10-100 mmol), | 150-400°C | 0.15-5 min |
| | • ethylenediamine 200 mmol (20-1000 mmol) | | |
| | • 2-propanol 160 mmol (20-400 mmol) | | |
| | • ethylene glycol (20-400 mmol) | | |
| 5 | • silver acetate 30 mmol (10-100 mmol) | 150-400°C | 0.15-5 min |
| | • ethylenediamine 250 mmol (20-1000 mmol) | | |
| | • ethanol 150 mmol (20-400 mmol) | | |
| | • n-butanol 50 mmol (20-400 mmol) | | |
| 6 | • silver oxalate 30 mmol (10-100 mmol) | 150-400°C | 0.15-5 min |
| | • triethylenetetramine 120 mmol (20-1000 mmol) | | |
| | • water 600 mmol (100-2000 mmol) | | |
| | • 2-propanol 100 mmol (20-400 mmol) | | |
| 7 | • silver nitrate 20 mmol (10-100 mmol) | 200-500°C | 0.15-5 min |
| | • triethylenetetramine 50 mmol (20-1000 mmol) | | |
| | • water 600 mmol (100-2000 mmol) | | |
| | • acetone 50 mmol (20-400 mmol) | | |
| 8 | • chlorauric acid 10 mmol (1-100 mmol) | 150-400°C | 0.15-5 min |
| | • water 600 mmol (100-2000 mmol) | | |
| | • polyethylene glycol p-(1,1,3,3-tetramethylbutyl)-phenyl ether 0.5 mmol (0.1-10 mmol) | | |
| 9 | • gold(III) chloride 5 mmol (1-100 mmol) | 500-900°C | 0.15-5 min |
| | • 2,3,10-mercaptopinane 80 mmol (10-2000 mmol) | | |
| | • alpha-pinene 80 mmol (10-2000 mmol) | | |
| 10 | • platinum(IV) chloride 5 mmol (1-100 mmol) | 500-700°C | 0.15-5 min |
| | • 2,3,10-mercaptopinane 60 mmol (10-2000 mmol) | | |
| | • tributyl phosphate 30 mmol (20-400 mmol) | | |
| 11 | • silver (1 um particles) 60 mmol (10-100 mmol) | 100-400°C | 0.15-5 min |
| | • silver hydroxide 10 mmol (10-100 mmol) | | |
| | • diethylenetriamine 40 mmol (20-1000 mmol) | | |
| | • water 800 mmol (100-2000 mmol) | | |
| | • sodium laureth sulfate 1 mmol (0.1-10 mmol) | | |
| 12 | • silver (0.5 µm particles) 3 g (1-10 g) | 550-900°C | 0.15-5 min |
| | • toluene 20 g (1-100 g) | | |
| | • poly(methylene metacrylate) 0.5 g (0.1-10 g) | | |
| 13 | • Murata Silver Paste for solar cells 20 g (1-100 g) | 750-800°C | 0.15-5 min |
| | • Tributyl phosphate 2 g (0.2-10 g) | | |
| 14 | • Targray Front-Side Silver Paste 5 g (1-100 g) | 750-800°C | 0.15-5 min |
| | • Acetone 1 g (1-100 g) | | |
| 15 | • Johnson Matthey front side silver paste 7 g (1-100 g) | 750-800°C | 0.15-5 min |
| | • Acetone 1 g (1-30 g) | | |
| 16 | • Heraeus SOL9671B silver paste | 750-800°C | 0.15-5 min |
| 17 | • silver (0.5 µm particles) 5 g (1-100 g) | 650-850°C | 0.15-5 min |
| | • lead glass frit (particle size below 1 um) 3 g (1-50 g) | | |
| | • toluene 20 g (1-400 g) | | |
| | • poly(methylene metacrylate) 0.5 g (0.1-10 g) | | |

It is also noted that mixtures of solutions mentioned in the table above can be applied for those cases when a mixture can be obtained.

It was further tested that when applying first solution comprising silver hydroxide and ethylenediamine, three cycles of depositing of first solution and heat treatments in 300-350°C for 2 min each were usually sufficient to provide the initial solid conductive layer that enables electroplating, however a larger number of cycles can provide a more robust layer.

It was further tested that when applying first solution comprising silver hydroxide and 1,2-diaminepropane, three cycles of depositing and heating in 320-380°C for 1 min each were usually sufficient to provide initial solid conductive layer that enables electroplating.

It was further tested that when applying first solution comprising platinum(IV) chloride and tributyl phosphate, four cycles of depositing and heat treating in 500-700°C for 2 min each were usually sufficient to provide initial solid conductive layer that enables electroplating.

Solutions for deposition of initial solid conductive layer via thermal transition should exhibit temperature of thermal transition to solid conductive compounds. After deposition on a non-conductive surface of a substrate and heating to such temperature for a suitable period of time, there should be a solid conductive layer formed on the surface of the substrate. During this process chemical and/or physical changes may occur, which finally contribute to the formation of the solid conductive layer.
It is further possible to make this conductive layer thicker via process of electroplating. Therefore, one can define a temperature of thermal transition to the conductive compound as a temperature to which a layer of a solution containing a noble metal or a noble metal compound should be heated to in order to obtain solid conductive layer. Temperature of thermal transition to a solid conductive compound can be determined by depositing a small amount of solution on a surface of glass and placing it between two electrodes that are in form of rectangular strips made of stainless steel each with width of 1 cm and thickness of 0.1 mm. The solution should fill the gap between two electrodes separated from each other by 0.05 mm. This setup is then heated to a predetermined temperature for a given period of time. After heating, resistance between the electrodes is measured and the layer is checked whether it became solid. To be more specific, a solid layer is a continuous layer in a solid state. This means that a layer of powder, liquid or a paste are not considered a solid layer according to this definition. A stable solid compound layer with a sheet resistance lower than 4 kΩ/sq was used as indication that the heating temperature and time of transition to conductive compounds were adequate for subsequent electroplating baths.

If particular components or stations in the process are working with different speeds and are difficult to be synchronized it is possible to use intermediate reel and divide the process into separate sub-processes. An example of facility with initial solid conductive layer station 230 and electroplating station **240** running separately is shown in Fig. 3a and Fig. 3b.

Fig. 3a shows a part of the facility in which initial solid conductive layer is formed in an initial solid conductive layer station **230** located downstream from the stripping station **220.** First solution is deposited with a first silicone hose **231a** filled with the first solution. The optical fiber is passed through the first silicone hose **231a** and then heat treated by a first heater **232a** located downstream from the first silicone hose. Subsequently, the optical fiber is passed through a second silicone hose **231b** filled with the first solution and then heat treated by a second heater **232b** located downstream from the second silicone hose **231a.** Subsequently, the optical fiber is passed through a third silicone hose **231c** filled with the first solution and then heat treated by a third heater **232c** located downstream from the third silicone hose **231c.** Optical fiber **F** after going through the initial solid conductive layer station **230** is wound on an intermediate reel or other intermediate optical fiber storage mean **312.**

Subsequently the optical fiber **F** is electroplated in a separate sub-process in a part of the facility shown in Fig. 3b. The optical fiber **F** is unwound from intermediate reel **312** and fed to electroplating station **240.** Electroplating station **240** comprises initial electroplating bath **241** and subsequent three electroplating baths **242, 243, 244.** A rinsing station **250,** in which the remains of the second solution are cleaned off from the optical fiber, is located downstream from the electroplating station **240** and upstream from the second reel **212.**

It is noted that intermediate optical fiber storage means such as intermediate reel **312** can be introduced between other stations or components that differ in processing speed. Therefore, the process can be run either continuously or as sub-processes with use of at least one intermediate reel 312. Instead of intermediate reel other intermediate optical fiber storage means known in the art can be applied.

A Method and resulted product of the process based on deposition of the initial solid conductive layer via thermal transition exhibits numerous advantageous features and characteristics cover the well-known method of electroless deposition.

Noble metal coatings obtained via thermal transition method according to the invention have a very strong adhesion to the surface of optical fiber. Accordingly, the coating strongly adheres to the surface of optical fiber and is devoid of internal stress. On contrary, noble metal coatings obtained by solution-based electroless deposition method exhibit weak mechanical properties such as high internal stress and relatively high brittleness, which result in flaking the coating off an optical fiber surface.

Additionally, use of thermal transition method according to the invention makes it easier to exceed maximal length of coated fiber as compared with methods based on electroless deposition.

In the solution-based electroless deposition method a surface of an optical fiber is not the only one that is being coated as the chemical reaction takes place in the entire bath of the solution which results in a metal layer to be also deposited on the surface of the bath tank and sometimes in the whole volume of the bath. This results in reagents being used up much faster and also in shortening the lifetime of the bath itself making it useless after a few rounds of process. Present invention is devoid of this disadvantage. In a deposition method that utilizes thermal transition according to the invention, the chemical processes do not take place in a solution. Instead, a layer of a solution is applied on the surface of the optical fiber, which is then drawn out of the bath and its surface is heat treated. A method that utilizes such process allows to coat kilometers of optical fiber with the initial solid conductive layer in one go.

A process of thermal transition may be more precisely referred to a thermal transition to solid conductive products. Thermal transition consists in chemical degradation and/or phase transition of compounds that occur at elevated temperatures and respectively lead to a change of physical state or to a chemical transformation of a compounds or complexes. In thermal transition the chemical degradation or phase transition or both occur during a heat treatment process leading to transformation of compounds and complexes into their different than initial physical states and/or chemical compositions. In particular drying of the solution that contains noble metals or noble metals complexes allows formation of the noble metal compound or complex layer on the surface of the optical fiber. Further heating leads to deposition of a conductive layer of noble metals. The process of drying usually should occur at elevated temperatures however heat treatment is not always necessary to obtain a solid conductive layer.

Temperature at which such transition occurs can be easily determined for given noble metal compound or complex by application of the solution for metallization on the non-conductive surface, like a glass slab. Metal contact clamps are applied to the edges of the glass and the glass is heated until it reaches a solid conductive surface, which can be further investigated. For this purpose, it is possible to use a multimeter or arrange for a special apparatus. For instance, it is possible to use a coated glass slab as a resistor connected in a series with a direct current power supply and a light emitting diode. Once the diode starts emitting light, it can be assumed that the layer became conductive. As stated before, the solution for this thermal transition method should contain at least one noble metal or a noble metal compound. Drying of the solution result in deposition of noble metal complex or compound. It runs in parallel with thermal transition which has a result of deposition of conductive substance. The reasoning behind this is that noble metals are more stable than their compounds at high temperatures, e.g., all noble metal oxides decompose at high temperatures to well conducting metal forms. For other metals an opposite process can be observed, i.e., formation of oxides from pure metals after heating. Moreover, it is worth to note that very often noble metal oxides and sulfides are semiconductors, which are also conductive, but their conductivities are not as good as those of pure metals. However, one can arrange the thermal degradation method in such a way that only an oxide or sulfide of noble metal would form. While it would exhibit enough conductivity for subsequent electroplating. Therefore, a solution for thermal transition to solid conductive products has to contain noble metal particles or noble metal compounds or both of them. If it contains noble metal compounds, then upon heating they will transform into conductive layer by chemical reaction.

In some cases, heating time may be adjusted so that formed layer consists of weakly conductive oxides or sulfides, like Ag₂O or Ag₂S. In case of AgCl thermal transition results in a layer of pure silver without intermediate step in which oxide or sulfide is heated. It is noteworthy to state that metal particles in most cases are coated with a very thin layer of silver tarnish such as oxide or sulfide which will transform during heating and will make it possible to have a well conducting layer.

It is stressed that person skilled in the art, after learning the teachings of the present specification would be able to routinely suggest multiple solutions and mixtures, which subjected to heat treatment are going to result in a solid conductive layer. Accordingly, embodiments of the method according to the invention discussed above are meant only as an example required to explain this invention not as a limitation. Also, number of repetitions of pre-coating and electroplating baths in an embodiment of the facility according to the invention are meant only to illustrate. Person skilled in the art would be able to tune parameters of the process to obtain different number of repetitions of pre-coating compatible with other elements of the facility.

## Claims

1. A method of coating an optical fiber (**F**) comprising
a process of deposition (**102**) of a first solution on a surface of a length of the optical fiber (**F**) to coat the surface of the optical fiber (**F**) with the first solution
a process of passing (**105**) said length of the optical fiber (**F**) through an electroplating bath of a second solution adapted to plate a predetermined metal on said length of the optical fiber (**F**) via the electroplating
**characterized in that**
the first solution comprises a solution of a noble metal or a noble metal compound in a solvent and
after the process of deposition (**102**) the optical fiber (**F**) coated with the first solution, is subjected to a heat treatment (**103**) to cause thermal transition of the first solution to a solid conductive layer and therefore to obtain an initial solid conductive layer on the surface of the optical fiber (**F**)
before the optical fiber (**F**) enters and passes (**105**) through the electroplating bath of the second solution.

2. Method according to claim 1, **characterized in that** the process of deposition (**102**) and the subsequent heat treatment (**103**) is repeated until an electrical sheet resistance of the initial solid conductive layer is lower than 0.8 MΩ/sq.

3. Method according to claim 2, **characterized in that** the process of deposition (**102**) and the subsequent heat treatment (**103**) is repeated until the electrical sheet resistance of the initial solid conductive layer is lower than 4 kΩ/sq.

4. Method according to claim 1 or 2 or 3, **characterized in that** the first solution comprises silver hydroxide.

5. Method according to claim 1 or 2 or 3 or 4, **characterized in that** the first solution comprises silver oxalate.

6. Method according to any of claims 1 to 4, **characterized in that** the first solution comprises chlorauric acid.

7. Method according to any of claims 1 to 4 or 6, **characterized in that** the first solution comprises gold(III) chloride.

8. Method according to any of claims 1 to 4, **characterized in that** the first solution comprises platinum(IV) chloride.

9. Method according to any of claim 1 to 8, **characterized in that** it is realized as a single continuous process.

10. Method according to any of claim 1 to 8, **characterized in that** it is divided into at least two sub-processes running at different speed.

11. An optical fiber coating facility comprising
an electroplating bath station **(240)** having at least one electroplating bath **(241, 242, 243, 244),** and
a conductive layer station **(230)** for pre-coating of an optical fiber (**F**) with an initial solid conductive layer, arranged upstream of the electroplating bath station (**240**) so that the optical fiber (**F**) is firstly pre-coated with the initial solid conductive layer and then enters the electroplating bath **(241, 242, 243, 244),**
**characterized in that** it is adapted to execute a method as defined in any of the claims 1 to 8 and
the conductive layer station **(230)** comprises at least one deposition station **(231a, 231b, 231c)** for deposition of a first solution on a surface of the optical fiber (**F**) and a heating means **(232a, 232b, 232c)** located downstream from the deposition station **(231a, 231b, 231c)** so that the optical fiber (**F**) having its surface covered with the first solution is subjected to a heat treatment.

12. Optical fiber coating facility according to claim 11, **characterized in that** it has at least one intermediate optical fiber storage means (**312**) for storing the optical fiber (**F**) in-between sub-processes.
